# EUROPEAN PATENT APPLICATION

(11) **EP 4 832 224 A1**
(43) Date of publication of application: **28.10.2026**
(21) Application number: 25880304.8
(22) Date of filing: 10.10.2025
(51) Int. Cl.: H01M 50/46, H01M 50/491, H01M 50/431, H01M 50/451, H01M 50/457, H01M 50/42, H01M 50/403

(54) **COMPOSITE SEPARATOR FOR LITHIUM SECONDARY BATTERY CONTAINING ORGANIC POLYMER ADHESIVE LAYER, MANUFACTURING METHOD THEREOF, AND LITHIUM SECONDARY BATTERY HAVING SAME**

(30) Priority: 18.10.2024 KR 20240143089
(71) Applicant: LG Energy Solution, Ltd., Seoul 07335 (KR)
(72) Inventor: NA, Ho-Young, Daejeon 34122 (KR); PARK, Young-Seok, Daejeon 34122 (KR); JUNG, Byoung-Hyo, Daejeon 34122 (KR)
(74) Representative: Hoffmann Eitle
(86) International application number: PCT/KR2025/015977
(87) International publication number: WO 2026/084375

(57) **Abstract**

A composite separator for a lithium secondary battery according to an aspect of the present disclosure comprises a porous organic polymer substrate, a porous inorganic heat-resistant layer coated on at least one surface of the organic polymer substrate, the porous inorganic heat-resistant layer containing inorganic particles and an organic binder polymer to hold the inorganic particles together, and an organic polymer adhesive layer coated on an outer surface of the porous inorganic heat-resistant layer, the organic polymer adhesive layer containing an organic binder polymer, wherein the inorganic particles include a mixture of particles having different shapes including i) plate-shaped particles and ii) needle-shaped particles, the plate-shaped particles including aluminum oxide particles, aluminum hydroxide particles or a mixture thereof, the needle-shaped particles including aluminum oxide particles, aluminum hydroxide particles or a mixture thereof, wherein the organic binder polymer included in the organic polymer adhesive layer includes a gelatin resin.

## Description

### TECHNICAL FIELD

The present disclosure relates to a lithium secondary battery including a composite separator having an inorganic heat-resistant layer and an organic polymer adhesive layer on the surface of a porous organic polymer substrate in a sequential order.

This application is based on and claims priority from Korean Patent Application No. 10-2024-0143089 filed on October 18, 2024 with the Korean Intellectual Property Office, the disclosure of which is incorporated herein by reference in its entirety.

### BACKGROUND ART

Lithium secondary batteries are generally designed to store energy with high energy density, and they basically include positive electrode/separator/negative electrode/electrolyte and can be charged and discharged by reversible conversion of chemical energy and electrical energy. They are used in a wide range of applications including small electronic devices such as mobile phones or laptop computers. Recently, in response to environmental issues, high oil prices and energy efficiency and storage, their application is rapidly expanding to hybrid electric vehicles (HEV), plug-in electric vehicles (plug-in EV), e-bikes and energy storage systems (ESS).

In manufacturing and use of lithium secondary batteries, ensuring safety is a significant challenge. In particular, a separator including a porous organic polymer substrate as commonly used exhibits extreme thermal shrinkage behaviors in high temperature situations due to the material properties and the features of manufacturing processes, posing stability issues such as internal short circuits. Therefore, to ensure safety of lithium secondary batteries, the separator having an inorganic heat-resistant layer formed by coating, on the porous organic polymer substrate, a mixture of inorganic particles and an organic binder polymer to hold the inorganic particles together has been developed. In particular, for the purpose of resistance reduction, the inorganic heat-resistant layer is formed by dispersing the inorganic particles and the organic binder polymer particles in a non-solvent, for example, water, to maintain the particle shape, and coating/drying it on the porous organic polymer substrate.

When the composite separator having the inorganic heat-resistant layer is stacked with positive and negative electrodes to manufacture an electrode assembly, they may be separated from each other due to insufficient interlayer adhesion strength. In the event that the electrode and the separator are separated, volume expansion/contraction of the electrode during charging/discharging may cause the cell to bend or twist. This problem is severe especially in pouch-type batteries, and as the number of stacks increases and cells are manufactured in larger lengths, severity increases.

To increase the adhesion strength between the electrode and the composite separator, a composite separator having a coating of vinylidene fluoride-based polymer binder or acrylic polymer binder on the surface of the inorganic heat-resistant layer has been suggested, but there is a need for development of an eco-friendly organic polymer adhesive layer to increase the adhesion strength with respect to the electrode and minimize harm to the environment.

To increase the energy density of lithium secondary batteries, it is necessary to reduce the thickness of the inorganic heat-resistant layer.

### DISCLOSURE

### Technical Problem

The present disclosure is directed to providing a composite separator for a lithium secondary battery having an inorganic heat-resistant layer and an organic polymer adhesive layer on the surface of a porous organic polymer substrate in a sequential order, wherein the inorganic heat-resistant layer has a smaller thickness, and the organic polymer adhesive layer has good adhesion strength with respect to electrode and is eco-friendly.

The present disclosure is further directed to providing a lithium secondary battery including the composite separator having the above-described features.

These and other objectives and advantages of the present disclosure will be understood by the following description. Meanwhile, it will be apparent that the objectives and advantages of the present disclosure may be realized by the means or methods set forth in the appended claims and a combination thereof.

### Technical Solution

A composite separator for a lithium secondary battery according to a first aspect of the present disclosure comprises:
a porous organic polymer substrate,
a porous inorganic heat-resistant layer coated on at least one surface of the organic polymer substrate, the porous inorganic heat-resistant layer containing inorganic particles and an organic binder polymer to hold the inorganic particles together, and
an organic polymer adhesive layer coated on an outer surface of the porous inorganic heat-resistant layer, the organic polymer adhesive layer containing an organic binder polymer,
wherein the inorganic particles include a mixture of particles having different shapes including i) plate-shaped particles and ii) needle-shaped particles, the plate-shaped particles including aluminum oxide particles, aluminum hydroxide particles or a mixture thereof, and the needle-shaped particles including aluminum oxide particles, aluminum hydroxide particles or a mixture thereof, and
wherein the organic binder polymer included in the organic polymer adhesive layer includes a gelatin resin.

According to a second aspect of the present disclosure, in the first aspect,
a weight mix ratio of i) the plate-shaped particles to ii) the needle-shaped particles is 20 to 80 : 80 to 20.

According to a third aspect of the present disclosure, in the first or second aspect,
an average particle size (D50) of i) the plate-shaped particles is 80 nm to 300 nm, and an average length of ii) the needle-shaped particles is 80 nm to 600 nm.

According to a fourth aspect of the present disclosure, in any one of the first to third aspects,
the organic polymer adhesive layer is positioned on the outer surface of the porous inorganic heat-resistant layer in a state that a plurality of organic polymer adhesive layers distributed is separated or connected, and covers a part of the surface of the porous inorganic heat-resistant layer.

According to a fifth aspect of the present disclosure, in the fourth aspect,
the organic polymer adhesive layer includes the plurality of organic polymer adhesive layers distributed, covering 10% to 60% of a total surface area of the porous inorganic heat-resistant layer.

According to a sixth aspect of the present disclosure, in any one of the first to fifth aspects,
a loading amount of the organic polymer adhesive layer is 0.5 to 3.0 g/m² based on the organic polymer adhesive layer coated on one surface of the porous inorganic heat-resistant layer.

According to a seventh aspect of the present disclosure, in any one of the first to sixth aspects,
a thickness of the porous inorganic heat-resistant layer is 1 µm to 5 µm based on the porous inorganic heat-resistant layer coated on one surface of the porous organic polymer substrate.

According to an eighth aspect of the present disclosure, in any one of the first to seventh aspects,
the organic binder polymer included in the porous inorganic heat-resistant layer includes an acrylic polymer.

According to a ninth aspect of the present disclosure, in the eighth aspect,
the acrylic polymer is non-particulate.

According to a tenth aspect of the present disclosure, in the eighth or ninth aspect,
the acrylic polymer includes at least one selected from the group consisting of methyl methacrylate, ethyl methacrylate, n-propyl methacrylate, i-propyl methacrylate, n-butyl methacrylate, i-butyl methacrylate, n-amyl methacrylate, i-amyl methacrylate, hexyl methacrylate, cyclohexyl methacrylate, 2-ethylhexyl methacrylate, n-octyl methacrylate, nonyl methacrylate, decyl methacrylate, hydroxymethyl methacrylate, hydroxyethyl methacrylate, ethylene glycol methacrylate, ethylene glycol dimethacrylate, propylene glycol dimethacrylate, trimethylolpropane trimethacrylate, pentaerythritol tetramethacrylate, dipentaerythritol hexamethacrylate, allyl methacrylate and ethylene dimethacrylate.

An eleventh aspect of the present disclosure relates to a method for manufacturing a composite separator for a lithium secondary battery, and the method comprises the steps of:
(S1) coating an aqueous slurry on at least one surface of a porous organic polymer substrate and drying the aqueous slurry to form a porous inorganic heat-resistant layer, the aqueous slurry containing i) plate-shaped particles, ii) needle-shaped particles and iii) an organic binder polymer, the plate-shaped particles including aluminum oxide particles, aluminum hydroxide particles or a mixture thereof, and the needle-shaped particles including aluminum oxide particles, aluminum hydroxide particles or a mixture thereof; and
(S2) spraying a solution of gelatin resin dissolved in an aqueous solvent on an outer surface of the porous inorganic heat-resistant layer and drying the solution.

A twelfth aspect of the present disclosure relates to a lithium secondary battery comprising a positive electrode, a negative electrode, and a separator positioned between the positive electrode and the negative electrode,
wherein the separator is the composite separator according to any one of the first to tenth aspects.

### Advantageous Effects

The composite separator according to the present disclosure contains a mixture of particles having different shapes, i.e., i) plate-shaped particles and ii) needle-shaped particles, as the inorganic particles of the porous inorganic heat-resistant layer, wherein the plate-shaped particles include aluminum oxide particles, aluminum hydroxide particles or a mixture thereof, and the needle-shaped particles include aluminum oxide particles, aluminum hydroxide particles or a mixture thereof. Accordingly, the thickness of the inorganic heat-resistant layer may be reduced, and the porosity of the inorganic heat-resistant layer may be maintained at high level.

In addition, the composite separator according to the present disclosure contains gelatin resin which is a natural material in the organic polymer adhesive layer, thereby achieving good adhesion strength with respect to electrode and improving eco-friendliness. The may be disposed on the outer surface of the porous inorganic heat-resistant layer in a state that the plurality of organic polymer adhesive layers distributed may be separated or connected, and thus, may cover only a part of the surface of the porous inorganic heat-resistant layer, thereby preventing or reducing a resistance rise driven by the formation of the adhesive layer.

### BRIEF DESCRIPTION OF THE DRAWINGS

The accompanying drawings illustrate an embodiment of the present disclosure and together with the detailed description, serve to describe the principle of the present disclosure, and thus, the scope of the present disclosure is not limited thereto. Here, the shape, size, scale or ratio of the elements in the accompanying drawings may be exaggerated for clarity.
FIG. 1 is a cross-sectional view showing schematically a cross section of a lithium secondary battery including a composite separator according to an embodiment of the present disclosure.
FIG. 2 is a plan view showing schematically a surface of a first organic polymer adhesive layer of FIG. 1.

### BEST MODE

The terms or words used in the specification and the appended claims should not be construed as being limited to general and dictionary meanings, and rather, should be interpreted based on the meanings and concepts corresponding to the technical aspects of the present disclosure on the basis of the principle that the inventor is allowed to define the terms appropriately for the best explanation. Therefore, the embodiments described herein and the illustrations shown in the drawings are embodiments of the present disclosure to describe the technical aspects of the present disclosure but not intended to be limiting, so it should be understood that a variety of other equivalents and modifications could be made thereto at the time the application was filed.

### Definition

The term "comprise" or "include" when used in this specification, specifies the presence of the stated elements, but does not preclude the presence or addition of one or more other elements unless the context clearly indicates otherwise.

In this specification, D₅₀ refers to a particle size at 50% point of cumulative particle size distribution. The particle size is measured using the laser diffraction method. Specifically, powder to be measured is dispersed in a dispersion medium and fed into a commercially available laser diffraction particle size measuring device (for example, Microtrac S3500), and the particle size distribution is calculated by measuring a difference in diffraction pattern as a function of particle size when particles pass through a laser beam. The D₅₀ is measured by calculating a particle diameter at 50% point of cumulative particle size distribution in the measuring device.

In this specification, an average length of the needle-shaped particles is determined by collecting 100 needle-shaped particles used and measuring their average length.

In this specification, the plate-shaped particle is a commercially available plate-shaped particle, for example, plate-shaped alumina, and refers to a particle having a shape with a larger length and width than thickness.

In this specification, the needle-shaped particle is a commercially available needle-shaped particle, for example, needle-shaped alumina, and refers to a particle having a shape with a larger length than diameter.

In this specification, an aspect ratio of the needle-shaped particle refers to a ratio of length of the needle-shaped particle to its diameter.

In this specification, the term "particulate" in organic binder polymer such as acrylic polymer or vinylidene fluoride-based polymer signifies that the organic binder polymer maintains its particle shape within a coating layer formed by adding the organic binder polymer in the particle shape to a dispersion medium and coating and drying it to form a porous inorganic heat-resistant layer or an organic polymer adhesive layer. In addition, the term "non-particulate" signifies that the organic binder polymer in the particle shape gets dissolved and loses the particle shape when it is added to a solvent to form a porous inorganic heat-resistant layer or an organic polymer adhesive layer, or the organic binder polymer does not get dissolved when it is added to a dispersion medium but loses the particle shape and transforms into a film during drying to form a coating layer.

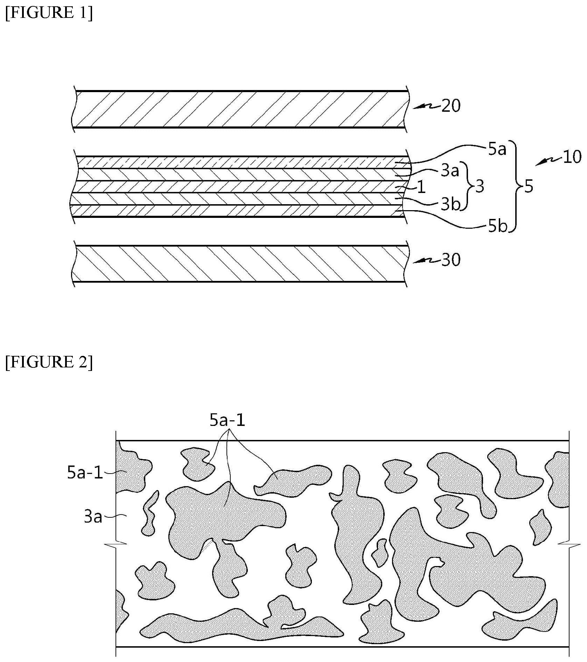

FIG. 1 is a diagram showing schematically a cross section of a composite separator according to a specific embodiment of the present disclosure and a lithium secondary battery including the same. For convenience of description, although FIG. 1 depicts a negative electrode 20 and a positive electrode 30 spaced apart from a composite separator 10, actually, the negative electrode 20/the composite separator 10/the positive electrode 30 in the lithium secondary battery tightly contact each other. Additionally, although FIG. 1 shows an embodiment in which the composite separator 10 has an inorganic heat-resistant layer 3 and an organic polymer adhesive layer 5 including a first inorganic heat-resistant layer 3a and a second inorganic heat-resistant layer 3b and a first organic polymer adhesive layer 5a and a second organic polymer adhesive layer 5b on two surfaces of a porous organic polymer substrate 1, respectively, the composite separator 10 may not have the second inorganic heat-resistant layer 3b and the second organic polymer adhesive layer 5b facing the positive electrode 30 and may have the first inorganic heat-resistant layer 3a and the first organic polymer adhesive layer 5a facing the negative electrode 20.

Referring to FIG. 1, the composite separator 10 according to an embodiment of the present disclosure has the porous inorganic heat-resistant layer 3 including the first porous inorganic heat-resistant layer 3a and the second porous inorganic heat-resistant layer 3b coated on two surfaces of the organic polymer substrate 1, wherein the porous inorganic heat-resistant layer 3 contains inorganic particles and an organic binder polymer to hold the inorganic particles together. Additionally, the composite separator 10 has the first organic polymer adhesive layer 5a and the second organic polymer adhesive layer 5b coated on the outer surface of the first porous inorganic heat-resistant layer 3a and the second porous inorganic heat-resistant layer 3b, respectively, wherein the first organic polymer adhesive layer 5a and the second organic polymer adhesive layer 5b contain gelatin resin.

When the inorganic heat-resistant layer 3 and the organic polymer adhesive layer 5 are formed on only one surface of the porous organic polymer substrate 1, the second inorganic heat-resistant layer 3b and the second organic polymer adhesive layer 5b facing the positive electrode 30 are not formed, and the first inorganic heat-resistant layer 3a and the first organic polymer adhesive layer 5a facing the negative electrode 20 may be formed. Alternatively, the first inorganic heat-resistant layer 3a and the first organic polymer adhesive layer 5a facing the negative electrode 20 is not formed, and the second inorganic heat-resistant layer 3b and the second organic polymer adhesive layer 5b facing the positive electrode 30 may be formed.

The inorganic particles of the porous inorganic heat-resistant layer (3) include a mixture of particles having different shapes, i.e., i) plate-shaped particles and ii) needle-shaped particles, wherein the plate-shaped particles include aluminum oxide particles, aluminum hydroxide particles or a mixture thereof, and the needle-shaped particles include aluminum oxide particles, aluminum hydroxide particles or a mixture thereof. Accordingly, for example, the inorganic heat-resistant layer may have a smaller thickness than a porous inorganic heat-resistant layer using spherical alumina particles, and the porosity of the inorganic heat-resistant layer containing the plate-shaped particles in combination with the needle-shaped particles may be maintained at higher level than the use of the plate-shaped particles alone.

In addition, the organic polymer adhesive layer 5 including the first organic polymer adhesive layer 5a and the second organic polymer adhesive layer 5b coated on the outer surface of the first porous inorganic heat-resistant layer 3a and the second porous inorganic heat-resistant layer 3b, respectively, contains gelatin resin which is a natural material, thereby maintaining good adhesion strength with respect to electrode and improving eco-friendliness.

Hereinafter, each component of the composite separator of the present disclosure and the lithium secondary battery including the same will be described in more detail.

### Porous organic polymer substrate

According to a specific embodiment of the present disclosure, the porous organic polymer substrate 1 may electrically insulate the negative electrode from the positive electrode to prevent short circuits and provide a path for the movement of lithium ions, and may include any commonly used organic polymer separator substrate for the lithium secondary battery without limitation. The separator substrate may include, for example, a porous organic polymer film or organic polymer nonwoven fabric including at least one of polymer resin such as polyolefin, for example, polyethylene or polypropylene, polyethylene terephthalate, polybutylene terephthalate, polyacetal, polyamide, polycarbonate, polyimide, polyetheretherketone, polyethersulfone, polyphenylene oxide, polyphenylene sulfide or polyethylene naphthalene.

In the present disclosure, the thickness of the organic polymer substrate may be 3 µm to 50 µm. The range of the organic polymer substrate is not limited to the aforementioned range, but when the thickness is much less than the aforementioned lower limit, the mechanical properties may decline, potentially causing damage to the separator while the battery is in use. Meanwhile, the pore size and porosity of the organic polymer substrate are not limited to particular ranges, but the pore size may be 0.01 µm to 50 µm, and the porosity may be 10 vol% to 95 vol%.

### Porous inorganic heat-resistant layer

Referring to FIG. 1, as well known, the first porous inorganic heat-resistant layer 3a contains the plurality of inorganic particles and the organic binder polymer to hold the inorganic particles together. When the organic polymer substrate 1 is coated with the porous inorganic heat-resistant layers 3a, 3b containing the inorganic particles, heat resistance and mechanical properties of the composite separator 10 are improved.

The inorganic particles that form the porous inorganic heat-resistant layer 3a are substantially packed closely together and act as a spacer to maintain the physical shape in the event of overheating in the battery, thereby preventing or reducing thermal shrinkage of the separator. The organic binder polymer is positioned between the inorganic particles to hold the inorganic particles together.

The inorganic particles included in the inorganic heat-resistant layer 3a include the mixture of particles having different shapes, i.e., i) the plate-shaped particles and ii) the needle-shaped particles, wherein the plate-shaped particles include aluminum oxide particles, aluminum hydroxide particles or a mixture thereof, and the needle-shaped particles include aluminum oxide particles, aluminum hydroxide particles or a mixture thereof.

Accordingly, for example, the inorganic heat-resistant layer may have a smaller thickness than a porous inorganic heat-resistant layer using spherical alumina particles, and the porosity of the inorganic heat-resistant layer containing the plate-shaped particles in combination with the needle-shaped particles may be maintained at higher level than the use of the plate-shaped particles alone, due to the presence of the needle-shaped particles between the plate-shaped particles. From this perspective, a weight mix ratio of i) the plate-shaped particles to ii) the needle-shaped particles may be 20 to 80:80 to 20, and more specifically, 40 to 60:60 to 40. Preferably, when the amount of the needle-shaped particles is larger than the amount of the plate-shaped particles, it may be advantageous in terms of porosity.

The plate-shaped particles and the needle-shaped particles added as the inorganic particles that form the porous inorganic heat-resistant layer 3a include, each independently, aluminum oxide particles, aluminum hydroxide particles or a mixture thereof. These particles may include, for example, Al₂O₃, AlO(OH) or Al(OH)₃.

Because the aluminum oxide particles or aluminum hydroxide particles generally do not change in physical properties when exposed to high temperature of 200°C or more, the composite separator 10 has high heat resistance due to the porous inorganic heat-resistant layer 3a. In the present disclosure, each of the first porous inorganic heat-resistant layer 3a and the second porous inorganic heat-resistant layer 3b may have a thickness of 1 µm to 5 µm, and more preferably 2 µm to 4 µm, based on the porous inorganic heat-resistant layer coated on one surface of the porous organic polymer substrate.

The average particle diameter (D₅₀) of the plate-shaped inorganic particles is not limited to a particular range, but may, for example, be 80 nm to 300 nm, and the average length of the needle-shaped particles is not limited to a particular range, but may, for example, be 80 nm to 600 nm. More specifically, the average particle diameter (D₅₀) of the plate-shaped inorganic particles may be 100 nm to 200 nm, and the average length of the needle-shaped particles is not limited to a particular range, but may, for example, be 200 nm to 400 nm. The aspect ratio of the needle-shaped particles may, for example, be 10 to 60, and more specifically, 30 to 50.

The organic binder polymer included in the porous inorganic heat-resistant layer 3 to hold the inorganic particles together may include a non-particulate organic binder polymer and a particulate organic binder polymer.

The non-particulate organic binder polymer may include, for example, an acrylic polymer having Tg that is equal to or lower than room temperature. The acrylic polymer having Tg that is equal to or lower than room temperature (25°C) loses the original shape and changes into a film shape during coating at or above room temperature after it is added to a dispersion medium together with the inorganic particles to prepare a slurry.

More specifically, the acrylic polymer is polymer containing carboxylic acid ester as a repeating unit, and preferably, may include (meth)acrylic acid ester. Specific examples of the (meth)acrylic acid ester may include, for example, at least one selected from methyl methacrylate, ethyl methacrylate, n-propyl methacrylate, i-propyl methacrylate, n-butyl methacrylate, i-butyl methacrylate, n-amyl methacrylate, i-amyl methacrylate, hexyl methacrylate, cyclohexyl methacrylate, 2-ethylhexyl methacrylate, n-octyl methacrylate, nonyl methacrylate, decyl methacrylate, hydroxymethyl methacrylate, hydroxyethyl methacrylate, ethylene glycol methacrylate, ethylene glycol dimethacrylate, propylene glycol dimethacrylate, trimethylolpropane trimethacrylate, pentaerythritol tetramethacrylate, dipentaerythritol hexamethacrylate, allyl methacrylate and ethylene dimethacrylate. Among them, in particular, the (meth)acrylic acid ester may include at least one selected from methyl methacrylate, ethyl methacrylate and 2-ethylhexyl methacrylate. The glass transition temperature Tg of the acrylic polymer may be equal to or lower than 40°C, but is not limited thereto.

In addition, the non-particulate organic binder polymer may include vinylidene fluoride-based polymer, for example, polyvinylidene fluoride-co-hexafluoropropylene or polyvinylidene fluoride-co-trichloroethylene, used alone or in combination, but is not limited thereto. The first porous inorganic heat-resistant layer 3a and the second porous inorganic heat-resistant layer 3b using the non-particulate organic binder polymer may be manufactured by dispersing the inorganic particles in a solvent, for example, acetone, then adding the non-particulate organic binder to the solvent and dissolving it to prepare a slurry or adding the particulate organic binder having Tg that is equal to or lower than room temperature (25°C) to a dispersion medium together with the inorganic particles to prepare a slurry, and coating the slurry on the porous organic polymer substrate 1 by dip coating.

In the porous inorganic heat-resistant layer 3a, the organic binder polymer holding the inorganic particles together may preferably include the organic binder polymer using the slurry in which the organic binder polymer is dispersed in the dispersion medium in terms of the reduced resistance of the inorganic heat-resistant layer.

The particulate organic binder polymer may include any known particulate organic binder polymer used in the organic polymer adhesive layer, and may include, for example, particles of vinylidene fluoride-based polymer. The vinylidene fluoride-based polymer is insoluble in the electrolyte solution, and may include a homopolymer of vinylidene fluoride, a copolymer of vinylidene fluoride and another polymerizable monomer, or a mixture thereof. The monomer with which vinylidene fluoride copolymerizes may include, but is not limited to, at least one selected from the group consisting of tetrafluoroethylene, hexafluoropropylene, trifluoroethylene, chloro fluoroethylene, 1,2 difluoroethylene, perfluoro(methylvinyl)ether, perfluoro(ethylvinyl)ether, perfluoro(propylvinyl)ether, perfluoro(1,3 dioxole), perfluoro(2,2-dimethyl-1,3-dioxole) and trichloroethylene. In particular, the vinylidene fluoride-based polymer may include a copolymer of vinylidene fluoride and hexafluoropropylene. The amount of the monomer with which vinylidene fluoride copolymerizes may be 1 wt% to 20 wt% of the copolymer, but is not limited thereto.

The average particle size (D₅₀) of the particulate organic binder polymer is not limited to a particular range, but may, for example, be 100 nm to 1000 nm, and more specifically, 200 nm to 600 nm. When the particulate organic binder polymer includes an acrylic polymer, the average particle diameter (D₅₀) is not limited to a particular range, but may, for example, be 100 nm to 500 nm, and more specifically 100 nm to 300 nm.

In the porous inorganic heat-resistant layer 3a, a ratio of the amount of the inorganic particles to the amount of the organic binder polymer may be determined, taking into account the thickness, pore size and porosity of the finally formed inorganic heat-resistant layer, and the inorganic particles may be included in an amount of 70 wt% to 99 wt% based on 100 wt% of the inorganic heat-resistant layer on the weight percent basis.

The porous inorganic heat-resistant layer 3a using the particulate organic binder polymer may be manufactured by dispersing the inorganic particles in an aqueous dispersion medium, adding the particulate organic binder polymer to the aqueous dispersion medium, dispersing it to prepare a slurry, coating the slurry on the porous organic polymer substrate 1 by dip coating, and drying the slurry. The aqueous dispersion medium may include at least one of water or alcohol having 1 to 5 carbon atoms. Using the aqueous dispersion medium, the organic binder polymer particles do not dissolve in the dispersion medium and are dispersed in the aqueous dispersion medium, maintaining the particle shape, and after coating and drying on the porous organic polymer substrate 1, the particle shape is still maintained.

### Organic polymer adhesive layer

The first organic polymer adhesive layer 5a coated on the outer surface of the first porous inorganic heat-resistant layer 3a and the second organic polymer adhesive layer 5b coated on the outer surface of the second porous inorganic heat-resistant layer 3b contain the gelatin resin.

As described above, the organic polymer adhesive layer 5 coated on the outer surface of the porous inorganic heat-resistant layer 3 contains the gelatin resin which is a natural material, thereby maintaining good adhesion strength with respect to electrode and improving eco-friendliness. When considering the adhesion strength with respect to electrode and air permeability, the loading amount of the organic polymer adhesive layer 5 may be 0.5 to 3.0 g/m², more specifically 0.7 to 2.0 g/m², and most specifically 0.8 to 1.3 g/m², based on the organic polymer adhesive layer 5a, 5b coated on one surface of the porous inorganic heat-resistant layer 3.

If necessary, the organic binder polymer included in the organic polymer adhesive layer 5 may further include at least one of carboxymethyl cellulose (CMC) or polyallylamine hydrochloride, but is not limited thereto.

FIG. 2 is a plan view showing schematically the surface of the first organic polymer adhesive layer of FIG. 1.

Referring to FIG. 2, the first organic polymer adhesive layer 5a may be disposed on the porous inorganic heat-resistant layer 3a in a state that a plurality of first organic polymer adhesive layers 5a-1 distributed may be separated or connected by agglomeration during drying of the slurry for forming the first organic polymer adhesive layer 5a after the slurry is coated on the porous inorganic heat-resistant layer 3a. In this instance, for example, the first organic polymer adhesive layer 5a may cover 10% to 60%, and more specifically 20% to 40% of the total surface area of the first porous inorganic heat-resistant layer 3a. The first organic polymer adhesive layer 5a may cover a part of the first porous inorganic heat-resistant layer 3a, thereby preventing or reducing the resistance rise driven by the formation of the adhesive layer.

### Method for manufacturing composite separator

The above-described composite membrane may be manufactured by a manufacturing method according to an embodiment of the present disclosure as described below, but is not limited thereto.

First, an aqueous slurry is coated on at least one surface of the porous organic polymer substrate and dried to form the porous inorganic heat-resistant layer, the aqueous slurry containing i) the plate-shaped particles, ii) the needle-shaped particles and iii) the organic binder polymer, wherein the plate-shaped particles include aluminum oxide particles, aluminum hydroxide particles or a mixture thereof, and the needle-shaped particles include aluminum oxide particles, aluminum hydroxide particles or a mixture thereof (step S1).

The dispersion medium for preparing the aqueous slurry may include at least one of water or alcohol having 1 to 5 carbon atoms. Because the aqueous dispersion medium is used, the organic binder polymer does not dissolve in the dispersion medium. Depending on the type and Tg of the organic binder polymer, the organic binder polymer is dispersed in the aqueous dispersion medium, maintaining the particle shape, or loses the particle shape and transforms into a film (becomes non-particulate).

Subsequently, a solution of the gelatin resin dissolved in the aqueous solvent is sprayed on the outer surface of the porous inorganic heat-resistant layer and dried (step S2).

For example, after it is added to water, the gelatin resin is completely dissolved when heated to a predetermined temperature of, for example, 60°C or more. The aqueous solution is sprayed on the outer surface of the porous inorganic heat-resistant layer and dried to manufacture the composite separator.

### Negative electrode and positive electrode

In a specific embodiment according to the present disclosure, the lithium secondary battery may be manufactured by a commonly used method well known in the technical field. According to an embodiment of the present disclosure, the lithium secondary battery may be manufactured by placing the composite separator 10 between the negative electrode 20 and the positive electrode 30.

That is, the composite separator 10 manufactured by the above-described method is placed between the negative electrode 20 and the positive electrode 30, followed by a lamination process involving applying heat and/or pressure to hold them together, so as to manufacture the electrode assembly. In an embodiment of the present disclosure, the lamination process may be performed by a roll press machine including a pair of press rollers. That is, the negative electrode, the separator and the positive electrode may be stacked in a sequential order and fed between the pressure rollers to form interlayer bonds. In this instance, the lamination process may be performed by a hot press method.

In an embodiment of the present disclosure, the electrode may be manufactured by attaching an electrode active material to an electrode current collector by a commonly used method well known in the technical field, but the method is not limited to a particular one. In the electrode active material, non-limiting examples of the positive electrode active material may include any positive electrode active material commonly used in the positive electrode of the lithium secondary battery, and in particular, may preferably include a lithium intercalation material such as lithium manganese oxide, lithium cobalt oxide, lithium nickel oxide, lithium iron oxide or composite oxide thereof. Non-limiting examples of the negative electrode active material may include any negative electrode active material commonly used in the negative electrode of the lithium secondary battery, and in particular, may preferably include a lithium intercalation material such as lithium metals, lithium alloys, carbon, petroleum coke, activated carbon, graphite or other carbons. Non-limiting examples of the positive electrode current collector may include foils made of aluminum, nickel or a combination thereof, and non-limiting examples of the negative electrode current collector may include foils made of copper, gold, nickel or copper alloys, or a combination thereof.

### Electrolyte

The electrode assembly including an assembly of the negative electrode, the separator and the positive electrode stacked is placed in a battery case, followed by electrolyte injection and activation, to manufacture the lithium secondary battery. The electrolyte that may be used in the present disclosure may include a salt and an organic solvent in which the salt dissolves or dissociates, wherein the salt has a structure of A⁺B⁻, where A⁺ includes an alkali metal cation such as Li⁺, Na⁺, K⁺ or a combination thereof, and B⁻ includes an anion such as PF₆⁻, BF₄⁻, Cl⁻, Br⁻, I⁻, ClO₄⁻, AsF₆⁻, CH₃CO₂⁻, CF₃SO₃⁻, N(CF₃SO₂)₂⁻, C(CF₂SO₂)₃⁻ or a combination thereof, wherein the organic solvent includes propylene carbonate (PC), ethylene carbonate (EC), diethyl carbonate (DEC), dimethyl carbonate (DMC), dipropyl carbonate (DPC), dimethyl sulfoxide, acetonitrile, dimethoxyethane, diethoxyethane, tetrahydrofuran, N-methyl-2-pyrrolidone (NMP), ethyl methyl carbonate (EMC), γ-butyrolactone or a mixture thereof, but is not limited thereto.

The electrolyte injection may be performed in a proper step of the battery manufacturing process according to the manufacturing process and the required properties of the final product. That is, the electrolyte injection may be done before battery assembly or at the final stage of battery assembly. The process of applying the electrode assembly of the present disclosure to the battery may include a winding process commonly used in the art, as well as a lamination (stack) and folding process of the composite separator and the electrode.

Hereinafter, the present disclosure will be described in detail using examples. However, many different variations may be made to the examples according to the present disclosure, and the scope of the present disclosure should not be construed as being limited to the following examples. The examples of the present disclosure are provided to explain the present disclosure to those skilled in the art more completely and thoroughly.

### Example 1

### Preparation of composite separator

The composite separator 10 of FIG. 1 was manufactured.

An emulsion containing 40 parts by weight of plate-shaped inorganic particles (Al₂O_{3,} D50: 120 nm), 60 parts by weight of needle-shaped inorganic particles (Al₂O₃, average length: 300 nm, aspect ratio: 40) and 5 parts by weight of acrylic polymer particles (CSB-130, Toyo Ink, Tg : -30°C) was added to water at the solid concentration of 35 wt%, followed by bead milling for 2 hour using zirconia beads with a particle size of 0.7 mm in the same amount as the inorganic particles, to prepare a slurry. The slurry was coated on two surfaces of a porous organic polymer separator substrate (porosity 45%, thickness 9 µm) made of polyethylene by dip coating, and dried to form a first inorganic heat-resistant layer and a second inorganic heat-resistant layer each having a thickness of 3 µm on two surfaces.

Subsequently, gelatin resin was added to water at the solid content of 25 wt%, and after the temperature was increased to 80°C, stirring was done at the rate of 1000 rpm for 10 minutes to prepare a gelatin resin solution. Subsequently, the solution was sprayed on the surface of each of the first inorganic heat-resistant layer and the second inorganic heat-resistant layer and dried to form an organic polymer adhesive layer. The loading amount of the organic polymer adhesive layer was 1.0 g/m² based on the adhesive layer formed on the first inorganic heat-resistant layer.

### Preparation of lithium secondary battery

LiNi_{0.8}Co_{0.1}Mn_{0.1}O₂, PVdF and carbon black were mixed at a weight ratio of 97.0:1.5:1.5 and dispersed in 2-methyl-2-pyrrolidone to prepare a positive electrode slurry, and the positive electrode slurry was coated on an aluminum current collector, followed by drying and rolling to manufacture a positive electrode.

Graphite, SBR and CMC were mixed at a weight ratio of 89.2:10:0.8 and dispersed in distilled water to prepare a negative electrode slurry, and the negative electrode slurry was coated on a copper current collector, followed by drying and rolling to prepare a negative electrode.

The as-prepared separator was sandwiched and stacked between the positive electrode and the negative electrode, followed by lamination using a hot press to manufacture a monocell sample. In this instance, pressure was applied for 5 minutes in the conditions of 70°C and 5kgf. The sample was 2cm x 6cm in size.

The sample was placed in a pouch-type case, and 1.0 g of electrolyte (ethylene carbonate: ethyl methyl carbonate = 7:3, ratio of amounts, LiPF₆ 1M) was injected to manufacture a secondary battery, which in turn was left untouched at room temperature for 3 hours. Subsequently, the pressure of 6 kgf/cm² was applied to the secondary battery at 55°C for 5 minutes. Under the pressure of 6 kgf/cm² at 55°C, the secondary battery was charged at 0.2C to SOC 3, and then charged at 1C to SOC 60. The pressure was removed from the charged battery, and aged at 55°C for 1 day.

### Examples 2-4

A lithium secondary battery was manufactured by the same process as Example 1, except that the loading amount of the organic polymer adhesive layer of Example 1 was changed to 1.2, 1.13 and 1.1 g/m² based on the adhesive layer formed on the first inorganic heat-resistant layer.

### Comparative Example 1

A lithium secondary battery was manufactured by the same process as Example 1, except that only the plate-shaped inorganic particles were used instead of both the plate-shaped inorganic particles and the needle-shaped inorganic particles.

### Comparative Example 2

A lithium secondary battery was manufactured by the same process as Example 1, except that chitosan was used instead of the gelatin resin.

### Measurement of air permeability of composite separator

The air permeability of the separator obtained in each Example and each Comparative Example was measured using Asahi-seico EG01-55-1MR air permeability tester.

### Measurement of adhesion strength with respect to electrode

The dry adhesion strength and the wet adhesion strength were evaluated using each as-prepared sample, and TABLE 1 below summarizes the results. As the sample for measuring the dry adhesion strength, the sample before electrolyte injection was used.

After it was prepared, each sample was left untouched at room temperature for 1 hour, and the adhesion strength was measured. The adhesion strength was measured using a tensile tester (UTM machine) by peeling off at an angle of 180° for dry adhesion strength and 90° for wet adhesion strength.

### Measurement of coverage

For each of the separators obtained in Examples and Comparative Examples, the coverage area of the organic polymer adhesive layer over the surface of the inorganic heat-resistant layer was measured through SEM images.

**TABLE 1**

| | Coverage (%) | Air permeability (sec/100 sec) | Dry adhesion strength / Wet adhesion strength (gf/20mm) |
|---|---|---|---|
| EX. 1 | 30 | 170 | 30 / 20 |
| EX. 2 | 35 | 180 | 35 / 25 |
| EX. 3 | 33 | 177 | 33 / 24 |
| EX. 4 | 32 | 175 | 31 / 22 |
| COM.EX. 1 | 32 | 223 | 30 / 21 |
| COM.EX. 2 | 33 | 178 | 25 / 10 |

As can be seen from the above TABLE 1, the composite separators of Examples 1-4 according to the present disclosure had good air permeability and adhesion strength, but the composite separator of Comparative Example 1 having the porous inorganic heat-resistant layer using the plate-shaped inorganic particles alone had lower air permeability, and the composite separator of Comparative Example 2 having the organic polymer adhesive layer using chitosan had lower adhesion strength.

### [List of Reference Numerals]

1: Porous organic polymer substrate
3a: First porous inorganic heat-resistant layer, 3b : Second porous inorganic heat-resistant layer
3: porous inorganic heat-resistant layer
5a: First organic polymer adhesive layer, 5b : Second organic polymer adhesive layer
5a-1: A plurality of first organic polymer adhesive layers, 5: Organic polymer adhesive layer
10: Composite separator
20: Negative electrode
30: Positive electrode

## Claims

1. A composite separator for a lithium secondary battery, the composite separator comprising:
a porous organic polymer substrate;
a porous inorganic heat-resistant layer coated on at least one surface of the organic polymer substrate, the porous inorganic heat-resistant layer containing inorganic particles and an organic binder polymer to hold the inorganic particles together; and
an organic polymer adhesive layer coated on an outer surface of the porous inorganic heat-resistant layer, the organic polymer adhesive layer containing an organic binder polymer,
wherein the inorganic particles include a mixture of particles having different shapes including i) plate-shaped particles and ii) needle-shaped particles, the plate-shaped particles including aluminum oxide particles, aluminum hydroxide particles or a mixture thereof, and the needle-shaped particles including aluminum oxide particles, aluminum hydroxide particles or a mixture thereof, and
wherein the organic binder polymer included in the organic polymer adhesive layer includes a gelatin resin.

2. The composite separator for the lithium secondary battery according to claim 1,
wherein a weight mix ratio of i) the plate-shaped particles to ii) the needle-shaped particles is 20 to 80 : 80 to 20.

3. The composite separator for the lithium secondary battery according to claim 1,
wherein an average particle size (D50) of i) the plate-shaped particles is 80 nm to 300 nm, and an average length of ii) the needle-shaped particles is 80 nm to 600 nm.

4. The composite separator for the lithium secondary battery according to claim 1,
wherein the organic polymer adhesive layer is positioned on the outer surface of the porous inorganic heat-resistant layer in a state that a plurality of organic polymer adhesive layers distributed is separated or connected, and covers a part of the surface of the porous inorganic heat-resistant layer.

5. The composite separator for the lithium secondary battery according to claim 4,
wherein the organic polymer adhesive layer includes the plurality of organic polymer adhesive layers distributed, covering 10% to 60% of a total surface area of the porous inorganic heat-resistant layer.

6. The composite separator for the lithium secondary battery according to claim 1,
wherein a loading amount of the organic polymer adhesive layer is 0.5 to 3.0 g/m² based on the organic polymer adhesive layer coated on one surface of the porous inorganic heat-resistant layer.

7. The composite separator for the lithium secondary battery according to claim 1,
wherein a thickness of the porous inorganic heat-resistant layer is 1 µm to 5 µm based on the porous inorganic heat-resistant layer coated on one surface of the porous organic polymer substrate.

8. The composite separator for the lithium secondary battery according to claim 1,
wherein the organic binder polymer included in the porous inorganic heat-resistant layer includes an acrylic polymer.

9. The composite separator for the lithium secondary battery according to claim 8,
wherein the acrylic polymer is non-particulate.

10. The composite separator for the lithium secondary battery according to claim 8,
wherein the acrylic polymer includes at least one selected from the group consisting of methyl methacrylate, ethyl methacrylate, n-propyl methacrylate, i-propyl methacrylate, n-butyl methacrylate, i-butyl methacrylate, n-amyl methacrylate, i-amyl methacrylate, hexyl methacrylate, cyclohexyl methacrylate, 2-ethylhexyl methacrylate, n-octyl methacrylate, nonyl methacrylate, decyl methacrylate, hydroxymethyl methacrylate, hydroxyethyl methacrylate, ethylene glycol methacrylate, ethylene glycol dimethacrylate, propylene glycol dimethacrylate, trimethylolpropane trimethacrylate, pentaerythritol tetramethacrylate, dipentaerythritol hexamethacrylate, allyl methacrylate and ethylene dimethacrylate.

11. A method for manufacturing the composite separator for the lithium secondary battery according to claim 1, the method comprising the steps of:
(S1) coating an aqueous slurry on at least one surface of a porous organic polymer substrate and drying the aqueous slurry to form a porous inorganic heat-resistant layer, the aqueous slurry containing i) plate-shaped particles, ii) needle-shaped particles and iii) an organic binder polymer, the plate-shaped particles including aluminum oxide particles, aluminum hydroxide particles or a mixture thereof, and the needle-shaped particles including aluminum oxide particles, aluminum hydroxide particles or a mixture thereof; and
(S2) spraying a solution of gelatin resin dissolved in an aqueous solvent on an outer surface of the porous inorganic heat-resistant layer and drying the solution.

12. A lithium secondary battery comprising a positive electrode, a negative electrode, and a separator positioned between the positive electrode and the negative electrode:
wherein the separator is the composite separator defined in any one of claims 1 to 10.
